# EUROPÄISCHE PATENTSCHRIFT

(11) **EP 1 135 618 B1**
(45) Veröffentlichungstag und Bekanntmachung des Hinweises auf die Patenterteilung: **04.12.2002**
(21) Anmeldenummer: 99946051.2
(22) Anmeldetag: 27.08.1999
(51) Int. Cl.: F16B 13/12

(54) **SPREIZDÜBEL**
EXPANSION ANCHOR
CHEVILLE A EXPANSION

(30) Priorität: 30.11.1998 DE 19855139
(43) Veröffentlichungstag der Anmeldung: 26.09.2001
(73) Patentinhaber: fischerwerke Artur Fischer GmbH & Co. KG, 72178 Waldachtal (DE)
(72) Erfinder: NEHL, Wolfgang, D-72178 Waldachtal (DE)
(86) Internationale Anmeldenummer: EP9906330
(87) Internationale Veröffentlichungsnummer: WO00032947

(56) Entgegenhaltungen:
- DE-A- 3 346 793
- DE-A- 3 921 733
- DE-U- 7 145 271
- FR-A- 2 529 970

## Beschreibung

Die Erfindung betrifft einen Spreizdübel mit den Merkmalen des Oberbegriffs des Anspruchs 1.

Ein derartiger Spreizdübel ist bekannt aus der DE 39 21 733 A1. Der bekannte Spreizdübel ist als Zweistoff-Dübel aus zwei Werkstoffen unterschiedlicher Härte hergestellt. Er besteht vereinfacht ausgedrückt aus zwei durch Spritzgießen ineinandergefügten Hülsen, die durch einen Längsschlitz in zwei in Dübellängsrichtung verlaufende Spreizelemente geteilt sind. Die äußere Hülse besteht aus einem härteren, die innere Hülse aus einem weicheren Werkstoff. Durch Eindrehen einer Spreizschraube werden die Spreizelemente aufgespreizt und der Spreizdübel in einem Bohrloch verankert. Dabei bewirkt der harte, an der Außenfläche des Dübels angeordnete Werkstoff eine gute Verankerung mit hoher Haltekraft im Bohrloch während der weiche Werkstoff, in den die Spreizschraube eingedreht wird, ein niedriges Eindrehmoment der Spreizschraube bewirkt.

Der bekannte Spreizdübel hat den Nachteil, daß die Schraube beim Eindrehen verlaufen kann, d. h. sie dreht sich schräg in den Spreizdübel ein und tritt durch den Längsschlitz, der den Dübel in die Spreizelemente teilt, seitlich aus dem Dübel aus. Weiterer Nachteil des bekannten Spreizdübels ist dessen geringe Torsionssteifigkeit, ein hinteres Dübelende kann sich durch das Eindrehen der Spreizschraube gegenüber einern vorderen Dübelende verdrehen.

Der Erfindung liegt die Aufgabe zugrunde, einen Zweistoff-Spreizdübel der eingangs genannten Art so auszubilden, daß er eine hohe Torsionssteifigkeit aufweist und die Spreizschraube beim Eindrehen in Dübellängsrichtung führt.

Diese Aufgabe wird erfindungsgemäß durch die Merkmale des Anspruchs 1 gelöst. Der erfindungsgemäße Spreizdübel weist Spreizfinger auf, die im wesentlichen in Dübellängsrichtung verlaufen und die aus dem härteren Werkstoff bestehen. Die Spreizfinger aus dem härteren Werkstoff sind am Außenumfang des Spreizdübels angeordnet. In einem Bohrloch in einem Vollbaustoff werden die Spreizfinger beim Eindrehen der Spreizschraube in den Spreizdübel von der Spreizschraube gegen die Bohrlochwandung gedrückt und der Spreizdübel dadurch mit hoher Haltekraft im Bohrloch verankert. Der weichere Werkstoff verbindet die Spreizfinger in Umfangsrichtung miteinander, wobei die Verbindung in Längsrichtung des Spreizdübels vorzugsweise durchgehend ausgebildet ist, jedoch auch unterbrochen sein kann. Der weiche Werkstoff setzt dem Aufspreizen der Spreizfinger einen nur geringen Widerstand entgegen, so daß das Aufspreizen nicht nennenswert behindert und das Eindrehmoment der Spreizschraube nicht nennenswert erhöht wird. Zugleich erhöht der weiche Werkstoff die Torsionssteifigkeit des Spreizdübels. Desweiteren bildet der weichere Werkstoff ein in Umfangsrichtung geschlossenes Spreizloch aus und verhindert auf dies Weise, daß die Spreizschraube schräg in den Spreizdübel eingedreht wird und seitlich aus dem Spreizdübel austritt. Desweiteren verringert der weichere Werkstoff das Eindrehmoment der Spreizschraube.

Beim Verankern des erfindungsgemäßen Spreizdübels in einem Hohlbaustoff begrenzt der weichere, die Spreizfinger in Umfangsrichtung verbindende Werkstoff die Aufspreizung der Spreizfinger. Das Eindrehen der Spreizschraube in den Spreizdübel in einem Hohibaustoff bewirkt ein in Dübellängsrichtung bogenförmiges Ausbauchen der Spreizfinger, der Spreizdübel wird durch einen formschlüssigen Hintergriff im Hohlbaustoff verankert. Der die Spreizfinger in Umfangsrichtung verbindende weichere Werkstoff verhindert, daß die Spreizfinger ausknicken oder sich knotenförmig zusammenknäulen. Es wird vermieden, daß das Eindrehmoment der Spreizschraube nach einem Anstieg wieder auf einen geringen Wert abfällt, wie dies bei ausknickenden oder knäulenden Spreizfingern der Fall wäre. Ein solches, nach anfänglichem Anstieg abfallendes Drehmoment vermittelt das Gefühl einer schlechten Verankerung und ist deswegen unerwünscht.

Bei einer Ausgestaltung der Erfindung ist eine Querschnittsfläche der Spreizfinger im Bereich eines vorderen Endes des Spreizdübels größer und in einem hinteren Teil des Spreizbereichs kleiner, die Querschnittsfläche der Spreizfinger verringert sich über den Spreizbereich von vorn nach hinten. Die kleinere Querschnittsfläche der aus dem härteren Werkstoff bestehenden Spreizfinger im hinteren Teil des Spreizbereichs bewirkt ein niedriges Eindremoment der Spreizschraube zu Beginn des Einschraubens. Die große Querschnittsfläche der aus dem härteren Werkstoff bestehenden Spreizfinger im Bereich des vorderen Endes des Spreizdübels bewirkt eine große Aufspreizung und dadurch eine gute Verankerung mit großer Haltekraft. Durch diese Maßnahme wird das Verhältnis zwischen Eindrehmoment, Aufspreizung und Verankerungskraft optimiert.

Vorzugsweise besteht das vordere Ende des Spreizdübels vollständig aus dem härteren Werkstoff. lnsbesondere ist am vorderen Endes des Spreizdübels ein Ring oder Hohlzylinder aus dem härteren Werkstoff gebildet, in den die Spreizschraube beim Aufspreizen des Spreizdübels eingedreht wird. Diese Ausgestaltung der Erfindung hat den Vorteil einer guten Verankerung. Weiterer Vorteil dieser Ausgestaltung der Erfindung ist, daß das vollständig aus dem härteren Werkstoff bestehende vordere Ende des Spreizdübels eine Art Mutter bildet, über die der Spreizdübel axial gestaucht wird, wenn die Spreizfinger in einem Hohlbaustoff ausgebaucht werden und dadurch außer Eingriff von einem Schraubengewinde der Spreizschraube gelangen.

Der weichere, die Spreizfinger in Umfangsrichtung verbindende Werkstoff bildet in Umfangsrichtung dehnbare Dehnzonen. Dabei wird bei einer Ausgestaltung der Erfindung die Dehnbarkeit in Umfangsrichtung des Spreizdübels durch eine Faltung des die Spreizfinger verbindenden weicheren Werkstoffs mit in Dübellängsrichtung verlaufenden Falzen erreicht. Die Dehnbarkeit wird dabei durch eine Formänderung, nämlich eine Streckung der Faltung, und nicht oder nur teilweise durch eine Materialdehnung des weicheren Werkstoffs erzielt. Dies hat den Vorteil einer größeren Dehnbarkeit sowie einer definierten Begrenzung der Dehnung in Umfangsrichtung. Diese definierte Begrenzung der Dehnung bewirkt eine definiert begrenzte Weite der Ausbauchung der Spreizfinger beim Aufspreizen des Spreizdübels in einem Hohlbaustoff.

Bei einer Ausgestaltung der Erfindung sind Spreizzungen aus dem weicheren Werkstoff ausgebildet, in die die aus dem härteren Werkstoff bestehenden Spreizfinger eingebettet sind. Die Spreizzungen aus dem weicheren Werkstoff zusätzlich zu den Spreizfingern aus dem härteren Werkstoff bewirken eine bessere Anpassung des Spreizdübels an ein Bohrloch. In einem Bohrloch in einem harten Vollbaustoff wird durch Eindrehen der Spreizschraube der weichere Werkstoff verdrängt und dadurch ein zu hohes Eindrehmoment verhindert. Die Spreizfinger aus dem harten Werkstoff bewirken eine gute Verankerung mit hoher Haltekraft. In einem Bohrloch in weniger hartem Baustoff bewirken die Spreizzungen eine größere Aufspreizung des Spreizdübels und dadurch ebenfalls eine gute Verankerung des Spreizdübels im Baustoff. Desweiteren formen sich die Spreizzungen aus dem weicheren Werkstoff an Unebenheiten und dgl. einer Bohrlochwandung an und bewirken dadurch ebenfalls eine gute Verankerung mit hoher Haltekraft.

Die Erfindung wird nachfolgend anhand eines in der Zeichnung dargestellten Ausführungsbeispiels näher erläutert. Es zeigen:

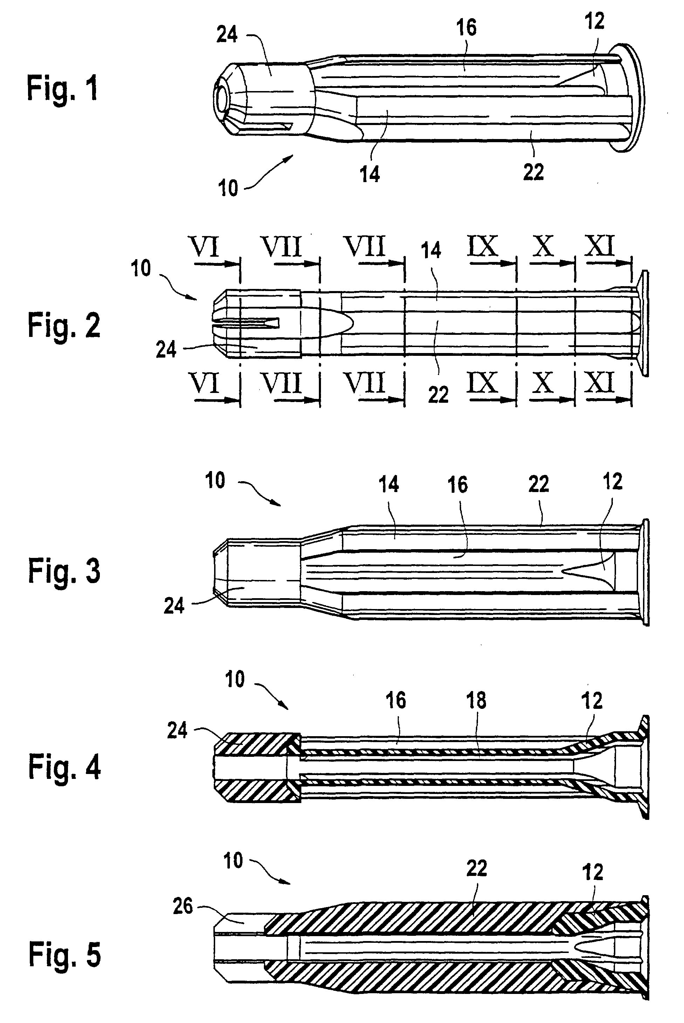

- Figur 1: einen erfindungsgemäßen Spreizdübel in perspektivischer Darstellung;
- Figur 2: eine Seitenansicht des Spreizdübels aus Figur 1;
- Figur 3: eine gegenüber Figur 2 um 90° gedrehte Ansicht des Spreizdübels aus Figur 1;
- Figur 4: einen Achsschnitt des Spreizdübels aus Figur 1 gemäß Linie IV-IV in Figur 6;
- Figur 5: ein Achsschnitt des Spreizdübels aus Figur 1 gemäß Linie V-V in Figur 6; und
- Figuren 6-11: Querschnitte des Spreizdübels aus Figur 1 in den in Figur 2 mit VI-VI bis XI-XI angegebenen Ebenen.

Der in der Zeichnung dargestellte Spreizdübel 10 ist als Zweistoff-Dübel durch Spritzgießen aus zwei Kunststoffen unterschiedlicher Härte hergestellt. Der Spreizdübel 10 weist an seinem hinteren Ende einen Trichter 12 auf, der zum Einführen einer nicht dargestellten Spreizschraube vorgesehen ist. Der Trichter 12 besteht aus dem weicheren Kunststoff. Vom Trichter 12 erstrecken sich in Richtung eines vorderen- oder Einführendes des Spreizdübels 10 zwei einander gegenüberliegend angeordnete Spreizzungen 14. Die Spreizzungen 14 sind einstückig mit dem Trichter 12, sie bestehen ebenfalls aus dem weicheren Kunststoff. Die Spreizzungen 14 haben einen näherungsweise kreissegmentförmigen Querschnitt, wie in Figuren 7-10 gut erkennbar. An ihren Außenseiten sind die Spreizzungen 14 durch den weicheren Kunststoff, aus dem auch die Spreizzungen 14 bestehen, miteinander verbunden. Im Verbindungsbereich ist der weichere Kunststoff dünn ausgebildet und weist in Dübellängsrichtung verlaufende Faltungen auf, die einstückig in die Spreizzungen 14 übergehen. Der dünn ausgebildete und Faltungen aufweisende, die Spreizzungen 14 miteinander verbindende Teil des weicheren Kunststoffs bildet in Dübellängsrichtung verlaufende Dehnzonen 16, die in Umfangsrichtung des Spreizdübels 10 dehnbar sind, so daß die Spreizzungen 14 durch Eindrehen der nicht dargestellten Spreizschraube zwischen die Spreizzungen 14 aufspreizbar sind. Zur axialen Führung der Spreizschraube weisen die Spreizzungen 14 an ihren einander zugewandten Flächen in Dübellängsrichtung verlaufende Führungsrinnen 18 auf.

Die die Spreizzungen 14 miteinander verbindenden Dehnzonen 16 erhöhen eine Torsionssteifigkeit des Spreizdübels 10. Desweiteren bilden sie ein in Umfangsrichtung geschlossenes Spreizloch und verhindern, daß die Spreizschraube beim Eindrehen in den Spreizdübel 10 zwischen den Spreizzungen 14 zur Seite austreten kann.

An ihren Außenseiten weisen die aus dem weicheren Kunststoff bestehenden Spreizzungen 14 in Dübellängsrichtung verlaufende, nach außen offene Nuten 20 mit sich änderndem Querschnitt auf. In die Nuten 20 sind Spreizfinger 22 eingebettet, die aus einem härteren Kunststoff bestehen. An ihren vorderen Enden gehen die Spreizfinger 22 einstückig in eine Art Hülse 24 über, die das vordere Ende des Spreizdübels 10 bildet und in der sich kein weicherer Kunststoff mehr befindet. Die Hülse 24 ist rundum geschlossen und weist zwei in Dübellängsrichtung verlaufende Aufweitungsnuten 26 auf.

Durch die Aufweitungsnuten 26 ist die Hülse 24 beim Eindrehen der Spreizschraube leichter aufweitbar und die Spreizschraube dadurch leichter eindrehbar.

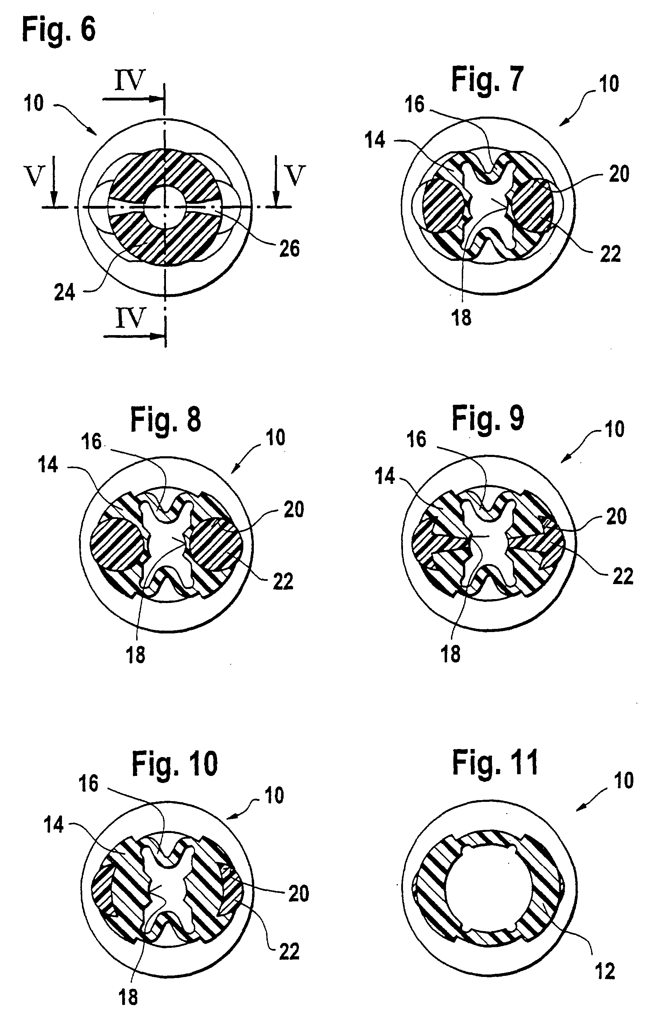

Die aus dem härteren Kunststoff bestehenden Spreizfinger 22 stehen am Außenumfang des Spreizdübels 10 über die Spreizzungen 14, in die sie eingebettet sind, über. Eine Querschnittsfläche der Spreizfinger 22 verkleinert sich in Dübellängsrichtung von vorn nach hinten. Die Spreizfinger 22 weisen in der Nähe des vorderen Endes des Spreizdübels einen näherungsweise kreisförmigen Querschnitt auf (Figuren 7 und 8), der in Richtung eines hinteren Endes des Spreizdübels 10 in einen Hammer- oder T-förmigen Querschnitt mit kreisrunder Außenfläche (Figur 9) und weiter in einen mondsichelförmigen Querschnitt (Figur 10) im Bereich des hinteren Endes des Spreizdübels 10 übergeht. Die sich in Dübellängsrichtung ändernde Querschnittsform der Spreizfinger 22 ist so gewählt, daß die Querschnittsfläche der Spreizfinger 22 von vorn nach hinten abnimmt, und daß die Spreizfinger 22 zumindest über einen großen Teil ihrer Länge weit nach innen bis nahe an das den Spreizdübel 10 axial durchsetzende Spreizloch zum Eindrehen der Spreizschraube heranreichen. Es besteht zwischen dem Spreizloch bzw. der in den Spreizdübel 10 einzudrehenden Spreizschraube und den Spreizfingern 22 eine nur dünne Schicht aus dem weicheren Kunststoff.

Zur Herstellung des erfindungsgemäßen Spreizdübels 10 ist es vorgesehen, zunächst den aus dem weicheren Kunststoff bestehenden Teil 12, 14, 16 des Spreizdübels 10 zu spritzen. Anschließend wird der härtere, die Spreizfinger 22 und die Hülse 24 bildende Kunststoff an den bereits gespritzten, weicheren Kunststoff angespritzt. Dabei ist es vorgesehen, beide Kunststoffe in einem Spritzgießwerkzeug zu spritzen. In eine Kavität des nicht dargestellten Spritzgießwerkzeugs wird ein Kern eingelegt, der das Spreizloch des Spreizdübels 10 formt. Ein weiterer Kern, der den Raum des später zu spritzenden härteren Kunststoffs ausfüllt, wird ebenfalls in die Kavität des Spritzgießwerkzeugs eingelegt und der aus dem weicheren Kunststoff bestehende Teil 12, 14, 16 des Spreizdübels 10 wird gespritzt. Anschließend wird der letztgenannte Kern axial um die Länge des aus dem harten Kunststoff bestehenden Teils 22, 24 des Spreizdübels 10 axial aus der Kavität des Spritzgießwerkzeugs herausgezogen, wodurch in der Kavität, in der sich der bereits gespritzte, aus dem weicheren Kunststoff bestehende Teil 12, 14, 16 des Spreizdübels 10 befindet, ein Hohlraum entsteht, der die Form des noch zu spritzenden, aus dem härteren Kunststoff bestehenden Teils 22, 24 des Spreizdübels 10 aufweist. Der härtere Kunststoff wird in diesen Hohlraum gespritzt und an den aus dem weicheren Kunststoff bestehenden Teil 12, 14, 16 des Spreizdübels 10 angespritzt. Anschließend wird der fertige Zweistoff-Spreizdübel 10 aus dem Spritzgießwerkzeug entformt.

Die Funktion des erfindungsgemäßen Spreizdübels 10 ist folgende: Das Verankern des Spreizdübels 10 in einem Bohrloch in einem Vollbaustoff wie beispielsweise Beton erfolgt, indem der Spreizdübel 10 in das Bohrloch eingesetzt und eine nicht dargestellte Spreizschraube in das Spreizloch des Spreizdübels 10 zwischen den Spreizzungen 14 eingeschraubt wird. Die Spreizschraube wird bis in die Hülse 24 eingedreht. Sie spreizt den Spreizdübel 10 auf und verankert diesen dadurch in an sich bekannter Weise im Bohrloch. Dabei bewirken die aus dem härteren Kunststoff bestehenden Spreizfinger 22, die nach innen bis an die Spreizschraube heranreichen und von dieser nahezu unmittelbar beaufschlagt werden einen sicheren Halt mit hoher Verankerungskraft im Bohrloch. Die Spreizzungen 14 aus dem weicheren Kunststoff lassen sich von der Spreizschraube verhältnismäßig leicht verdrängen, so daß das Eindrehmoment niedrig bleibt. Die kleine Querschnittsfläche der aus dem harten Kunststoff bestehenden Spreizfinger 22 im Bereich des hinteren Endes des Spreizdübels 10 bewirkt ein leichtes Eindrehen der Spreizschraube zu Beginn des Eindrehens. Die zum vorderen Ende des Spreizdübels 10 bis in die Hülse 24 hin zunehmende Querschnittsfläche der Spreizfinger 22 bewirken eine große Aufspreizung und dadurch eine hohe Verankerungskraft des Spreizdübels, 10.

Wird der Spreizdübel 10 in einem Bohrloch in einem Hohlbaustoff wie beispielsweise einem Ziegel oder einem Hohlblockstein eingesetzt, werden durch Eindrehen der Spreizschraube die Spreizzungen 14 zusammen mit den Spreizfingern 22 auseinandergespreizt. Die Dehnzonen 16, die die Spreizfinger 14 miteinander verbinden, begrenzen die Spreizweite, um die sich die Spreizzungen 14 und die Spreizfinger 22 auseinanderspreizen lassen. Dadurch wird vermieden, daß die Spreizzungen 14 und die Spreizfinger 22 nach außen ausknicken, sie wölben sich beim Eindrehen und Anziehen der Spreizschraube in die Hülse 24 in einem Hohlraum bogenförmig nach außen. Durch das Aufspreizen wird ein Formschluß und damit eine gute Verankerung des Spreizdübels 10 im Hohlbaustoff erreicht. In dem die Dehnzonen 16 das Ausknicken der Spreizzungen 14 und der Spreizfinger 22 verhindern, wird vermieden, daß sich die Hülse 24 in einem Hohlbaustoff mit der Spreizschraube bis nahe an das hintere Ende des Spreizdübels 10 heranziehen läßt. Zudem wird verhindert, daß nach einem anfänglichen Drehmomentanstieg beim Eindrehen der Spreizschraube nach Beginn des Ausknickens der Spreizzungen 14 und der Spreizfinger 22 das Eindrehmoment stark abfällt, was das Gefühl einer schlechten Verankerung vermitteln würde. Der erfindungsgemäße Spreizdübel 10 vermittelt dadurch beim Verankern in einem Hohibaustoff durch das ansteigende Eindrehmoment der Spreizschraube ein Gefühl für den korrekten Sitz und eine gute Verankerung des Spreizdübels 10.

## Patentansprüche

1. Hülsenförmiger Spreizdübel, der als Zweistoff-Dübel aus zwei Werkstoffen unterschiedlicher Härte hergestellt ist und der einen Spreizbereich mit im wesentlichen in einer Dübellängsrichtung verlaufenden Spreizelementen aufweist, die durch Eindrehen einer Spreizschraube in ein Spreizloch zwischen den Spreizelementen aufspreizbar sind, **dadurch gekennzeichnet, daß** der Spreizdübel (10) im wesentlichen in Dübellängsrichtung verlaufende Spreizfinger (22) aufweist, die aus härterem Werkstoff bestehen und die am Außenumfang des Spreizdübels (10) angeordnet sind, daß die Spreizfinger (22) in einer Umfangsrichtung durch den weicheren Werkstoff verbunden sind, und daß das Spreizloch in dem weicheren Werkstoff ausgebildet ist, der ein in Umfangsrichtung geschlossenes Spreizloch bildet.

2. Spreizdübel nach Anspruch 1, **dadurch gekennzeichnet, daß** die Spreizfinger (22) eine sich von einem vorderen zu einem hinteren Ende des Spreizdübels (10) verkleinernde Querschnittsfläche aufweisen.

3. Spreizdübel nach Anspruch 1, **dadurch gekennzeichnet, daß** ein vorderes Ende des Spreizdübels (10) vollständig aus dem härteren Werkstoff besteht, der im Bereich des vorderen Endes des Spreizdübels (10) das Spreizloch bildet.

4. Spreizdübel nach Anspruch 1, **dadurch gekennzeichnet, daß** der Spreizdübel (10) die Spreizfinger (22) verbindende, im wesentlichen in Dübellängsrichtung verlaufende und in Umfangsrichtung dehnbare Dehnzonen (16) aus dem weicheren Werkstoff aufweist.

5. Spreizdübel nach Anspruch 4, **dadurch gekennzeichnet, daß** die Dehnzonen (16) Faltungen mit im wesentlichen in Dübellängsrichtung verlaufenden Falzen aufweisen.

6. Spreizdübel nach Anspruch 1, **dadurch gekennzeichnet, daß** die Spreizfinger (22) in im wesentlichen in Dübellängsrichtung verlaufende Spreizzungen (14) aus dem weicheren Werkstoff eingebettet sind.

## Claims

1. A sleeve-form expansible fixing plug, which is manufactured as a two-material fixing plug from two materials of different hardness and which comprises an expansion zone having expansion elements running substantially in a longitudinal direction of the fixing plug, which expansion elements are expandable by screwing an expansion screw into an expansion hole between the expansion elements, **characterized in that** the expansible fixing plug (10)comprises expansion fingers (22) running substantially in the longitudinal direction of the fixing plug, which consist of relatively hard material and which are arranged at the outer circumference of the expansible fixing plug (10), the expansion fingers (22) are joined circumferentially by the relatively soft material, and the expansion hole is formed in the relatively soft material, which forms a circumferentially closed expansion hole.

2. An expansible fixing plug according to claim 1, **characterized in that** the expansion fingers (22) have a cross-sectional area decreasing from the leading to the rear end of the expansible fixing plug (10).

3. An expansible fixing plug according to claim 1, **characterized in that** the leading end of the expansible fixing plug (10) consists entirely of the relatively hard material, which forms the expansion hole in the region of the leading end of the expansible fixing plug (10).

4. An expansible fixing plug according to claim 1, **characterized in that** the expansible fixing plug (10) has dilatation zones (16) of the relatively soft material connecting the expansion fingers (22), running substantially in the longitudinal direction of the fixing plug and dilatable circumferentially.

5. An expansible fixing plug according to claim 4, **characterized in that** the dilatation zones (16) comprise folded portions with folds running substantially in the longitudinal direction of the fixing plug.

6. An expansible fixing plug according to claim 1, **characterized in that** the expansion fingers (22) are embedded in expansion tongues (14) of the relatively soft material running substantially in the longitudinal direction of the fixing plug.

## Revendications

1. Cheville à expansion en forme de douille, qui est fabriquée sous la forme d'une cheville à deux composants formée de deux matériaux de dureté différente et qui présente une zone d'expansion avec des éléments d'expansion s'étendant sensiblement dans une direction longitudinale de la cheville, qui peuvent être écartés par le vissage d'une vis d'expansion dans un trou d'expansion entre les éléments d'expansion, **caractérisée en ce que** la cheville à expansion (10) présente des doigts d'écartement (22) allant sensiblement dans le sens longitudinal de la cheville, qui sont formés de matériau plus dur et qui sont disposés sur le pourtour extérieur de la cheville à expansion (10), **en ce que** les doigts d'écartement (22) sont reliés dans un sens périphérique par le matériau plus tendre et **en ce que** le trou d'expansion est réalisé dans le matériau plus tendre qui forme un trou d'expansion fermé dans le sens périphérique.

2. Cheville à expansion selon la revendication 1, **caractérisée en ce que** les doigts d'écartement (22) présentent une surface de section qui se réduit depuis une extrémité avant jusqu'à une extrémité arrière de la cheville à expansion (10).

3. Cheville à expansion selon la revendication 1, **caractérisée en ce qu'**une extrémité avant de la cheville à expansion (10) est complètement formée du matériau plus dur, qui forme le trou d'expansion dans la zone de l'extrémité avant de la cheville à expansion (10).

4. Cheville à expansion selon la revendication 1, **caractérisée en ce que** la cheville à expansion (10) présente des zones d'extension (16) reliant les doigts d'écartement (22), s'étendant sensiblement dans le sens longitudinal de la cheville et extensibles dans le sens périphérique et formées du matériau plus tendre.

5. Cheville à expansion selon la revendication 4, **caractérisée en ce que** les zones d'extension (16) présentent des pliures avec des plis s'étendant sensiblement dans le sens longitudinal de la cheville.

6. Cheville à expansion selon la revendication 1, **caractérisée en ce que** les doigts d'écartement (22) sont insérés dans des lames d'expansion (14) s'étendant sensiblement dans le sens longitudinal de la cheville et formés du matériau plus tendre.
